Europäisches Patentamt

European Patent Office

Office européen des brevets

(11) Numéro de publication : **0 401 891 B1**

(12)

# FASCICULE DE BREVET EUROPEEN

(45) Date de publication du fascicule du brevet :
**16.12.92 Bulletin 92/51**

(51) Int. Cl.⁵ : **B64B 1/44, B64G 9/00**

(21) Numéro de dépôt : **90201323.4**

(22) Date de dépôt : **25.05.90**

(54) **Aerostat destiné à évoluer de facon autonome et réversible entre le sol d'une planète à atmosphère et une altitude plafond prédéterminée.**

(30) Priorité : **09.06.89 FR 8908070**

(43) Date de publication de la demande :
**12.12.90 Bulletin 90/50**

(45) Mention de la délivrance du brevet :
**16.12.92 Bulletin 92/51**

(84) Etats contractants désignés :
**AT BE CH DE DK ES FR GB GR IT LI LU NL SE**

(56) Documents cités :
**EP-A- 0 031 981
FR-A- 1 535 761
FR-A- 2 360 089
FR-A- 2 624 092
US-A- 3 484 058
US-A- 3 773 279
US-A- 4 042 192
US-A- 4 394 998
MACHINE DESIGN. vol. 53, no. 17, juillet 1981,
CLEVELAND US pages 70 - 71; "Around the
world in 20 days is ballon designer'sgoal"**

(73) Titulaire : **CENTRE NATIONAL D'ETUDES
SPATIALES (C.N.E.S.) Etablissement public,
scientifique et
technique à caractère industriel et
commercial 2, place Maurice-Quentin
F-75039 Paris Cédex 01 (FR)**

(72) Inventeur : **Regipa, Robert
Bâtiment Provence, 226, avenue
Saint-Exupéry
F-31400 Toulouse (FR)**
Inventeur : **Villaeys, Jacques
19 Avenue Arnaud
F-31320 Castanet (FR)**

(74) Mandataire : **Barre, Philippe
Cabinet Barre-Gatti-Laforgue 95 rue des
Amidonniers
F-31069 Toulouse Cédex (FR)**

EP 0 401 891 B1

**Description**

L'invention concerne un aérostat destiné à évoluer de façon autonome et réversible entre le sol d'une planète à atmosphère et une altitude plafond prédéterminée.

Un des prochains objectifs de la conquête spatiale est d'envoyer une mission sur la planète Mars. A cet effet, plusieurs techniques ont été proposées en vue d'explorer cette planète. Parmi celles-ci, il a été envisagé de réaliser un ballon spatial apte à évoluer de façon autonome et réversible entre le sol de la planète et une altitude prédéterminée. Cette solution présente, en effet, l'avantage de permettre, à la fois, une étude du sol de la planète et de l'atmosphère entourant cette dernière. Un tel objectif ne peut être atteint en s'inspirant des techniques utilisées pour la réalisation de ballons captifs tels que décrits notamment dans le brevet US 3.773.279, ou de ballons libres tels que décrits dans les brevets FR 1.535.761, US 3.484.058 et US 4.394.998. En effet, aucun de ces ballons ne peut évoluer naturellement sans intervention externe de façon réversible entre le sol d'une planète et une altitude prédéterminée.

De ce fait, les études effectuées se sont orientées vers la réalisation d'un ballon spatial conçu pour domestiquer le bilan radiatif relatif entre le jour et la nuit, de façon à prendre de lui-même de l'altitude durant le jour et à en perdre durant la nuit.

Dans ce sens, une première solution a consisté à réaliser un ballon spatial comportant une enveloppe fermée contenant un gaz plus léger que le gaz présent dans l'atmosphère, dotée d'une face interne métallisée en vue de permettre un réchauffage suffisant de ce gaz. La masse de gaz est en outre adaptée de façon que le ballon ne puisse décoller durant la nuit en raison de la faible température du gaz et prenne de l'altitude durant le jour suite au réchauffement de ce dernier. Cette solution, dont le gros avantage réside dans sa simplicité, présente toute fois un inconvénient fondamental. En effet, si au sol le volume de gaz renfermé dans l'enveloppe est faible, lorsque le ballon spatial arrive à son plafond, la même masse de gaz occupe la totalité du volume de l'enveloppe en raison de la faible pression de l'atmosphère ambiante. Ce gaz très chaud provoque des surpressions importantes qui peuvent conduire à l'éclatement du ballon spatial. Pour supporter ces surpressions, la seule solution est donc de prévoir une enveloppe en un matériau très résistant. Toutefois, cette solution n'est pas adaptée pour ce genre de mission en raison du poids important d'une telle enveloppe, incompatible avec un transport par satellite.

Pour pallier cet inconvénient, une deuxième solution a consisté à accoupler au moyen d'un lien un premier ballon comportant une enveloppe fermée non métallisée et une montgolfière solaire dotée d'une ouverture permanente. Cette solution décrite dans le brevet FR 2.360.089 a donc consisté à conjuguer les effets d'un ballon porteur fournissant une force ascensionnelle constante mais insuffisante pour permettre à l'ensemble de prendre de l'altitude, et d'une montgolfière fournissant une force ascensionnelle variable en fonction de la température et de la densité du gaz disponible dans l'atmosphère ambiante. Cette montgolfière fournit ainsi une force ascensionnelle maximale à de faibles altitudes, qui diminue au fur et à mesure de l'élévation de l'ensemble. Les risques de mise en surpression du ballon porteur sont donc diminués. Toutefois, cette solution présente également des inconvénients. En effet, les risques de mise en surpression du ballon porteur, bien que diminués, subsistent tout de même en raison de la force ascensionnelle de la montgolfière qui renferme un gaz très chaud. De plus, le décollage d'un tel système est très hasardeux, notamment en cas de vents violents. En effet, lorsque l'ensemble se trouve au sol, le ballon porteur et la montgolfière sont maintenus au-dessus du sol grâce à la portance du ballon porteur. La montgolfière est donc soumise à l'action du vent et peut se vider en prenant la forme d'un spee si elle est démunie de lien interpolaire, ou en s'étendant autour de son lien interpolaire si, tel que décrit dans le brevet FR 2.360.089, elle en est dotée. Dans l'un et l'autre cas, l'amorçage de son remplissage sera donc très hasardeux.

Une partie de ces inconvénients a été solutionnée par la mise au point de l'aérostat décrit dans la demande de brevet français n° 87.16842 au nom du demandeur, non publiée avant la date de dépôt de la présente demande. Cet aérostat conjugue, comme précédemment, les effets d'un ballon porteur et d'une montgolfière. Toutefois, la solution aux problèmes ci-dessus évoqués a été apportée en réalisant un aérostat pour lequel :

- la montgolfière solaire comprend une extrémité ouverte opposée à son extrémité inférieure et délimitée par une bordure annulaire de section conjuguée de celle du ballon porteur,
- des moyens de fixation étanche de la bordure annulaire de la montgolfière sur la paroi périphérique du ballon porteur, sont adaptés pour solidariser les enveloppes desdits ballon porteur et montgolfière de façon que le ballon porteur s'étende partiellement à l'intérieur de l'enveloppe de la montgolfière.

La solution a donc consisté à associer un ballon porteur à masse constante et volume variable avec une montgolfière solaire à masse et volume variables qui possède :

- un volume maximum au sol et dans les basses couches en vue d'obtenir une efficacité maximale lors du décollage, et dans les basses couches,
- un volume faible en altitude qui lui confère une efficacité faible voire nulle en vue d'éviter la mise sous pression et l'éclatement du ballon porteur.

En outre, pour chaque type de mission, les caractéristiques dimensionnelles de cet aérostat peuvent être déterminées selon une méthode spécifique consistant :

- à estimer la variation de poussée, par unité de volume, de la montgolfière en l'absence et en présence de rayonnement solaire et à déterminer le volume de cette montgolfière nécessaire pour obtenir le décollage de l'aérostat et de la charge portée par ce dernier,

- à déterminer une masse de gaz ml qui est, en l'absence de rayonnement solaire :

. nécessaire dans le ballon porteur pour assurer le maintien dudit ballon porteur et de la montgolfière au-dessus du sol,

. inférieure à la masse de gaz nécessaire dans le ballon porteur pour assurer le décollage de l'aérostat et de la charge,

- à réaliser un ballon porteur de dimensions adaptées pour que le volume dudit ballon soit sensiblement supérieur au volume occupé par la masse de gaz ml à l'altitude plafond prédéterminée,

- et à enfiler la montgolfière autour du ballon porteur, par sa bordure annulaire, de façon que :

. le ballon porteur s'étende partiellement à l'intérieur de ladite montgolfière,

. le volume résiduel de la montgolfière au sol corresponde au volume nécessaire pour obtenir le décollage de l'aérostat et de la charge.

La fiabilité de fonctionnement de cet aérostat repose donc sur les points suivants :

- l'accrochage de la montgolfière est effectué sur une portion de l'enveloppe du ballon porteur sollicitée en tension circonférentielle, au sol, de façon à conférer à cette montgolfière un volume résiduel important. Le moindre réchauffement de la masse de gaz ainsi renfermé à l'intérieur de la montgolfière provoque donc un remplissage rapide de cette dernière. Il est à noter, en outre, que ce volume résiduel est d'autant plus important que le volume du ballon porteur est faible au sol, en raison de la pression importante du gaz présent dans l'atmosphère,

- lors du décollage et dans les basses couches, la montgolfière acquiert rapidement son volume maximum et fournit donc sa force ascensionnelle maximale,

- au fur et à mesure de l'ascension, l'expansion de la masse de gaz contenue dans le ballon porteur entraîne différentiellement la diminution du volume de la montgolfière et par conséquent de la force ascensionnelle de cette dernière,

- lorsque le soleil se trouve au zénith, le fait que la montgolfière soit dépourvue d'un dôme entraîne une diminution de l'échauffement du gaz qu'elle renferme.

Ces deux derniers points concourrent pour que la poussée de la montgolfière soit de plus en plus fiable au fur et à mesure de l'ascension, et que, par conséquent, l'aérostat monte moins haut que les aérostats décrits ci-avant. Les risques de mise en surpression du ballon porteur se trouvent ainsi limités.

Toutefois, bien que limités, ces risques de mise en surpression subsistent toujours du fait du manque de connaissances de l'environnement atmosphérique (radiations, poussière, albedo...) des planètes à atmosphères, au-dessus desquelles l'aérostat est destiné à évoluer. Or, vu le type de missions auxquelles sont destinés de tels aérostats, nécessitant le lancement d'un satellite, il ne peut être envisagé de couvrir le moindre risque de destruction prématuré de ces aérostats.

La présente invention se propose de fournir un aérostat perfectionné comportant, comme l'aérostat décrit ci-dessus, un ballon porteur à masse constante et volume variable, et une montgolfière solaire à masse et volume variables, et apportant une solution au problème ci-dessus évoqué.

L'objectif essentiel de la présente invention est ainsi de supprimer tout risque de mise en surpression du ballon porteur de l'aérostat, tout en conservant à cet aérostat un poids et un volume de rangement réduits compatibles avec un transport par satellite.

A cet effet, l'invention concerne un aérostat destiné à évoluer de façon autonome et réversible entre le sol d'une planète à atmosphère et une altitude plafond prédéterminée, du type ballon double comprenant :

- un premier ballon, dit porteur, comportant une enveloppe fermée en un matériau transparent au rayonnement solaire, définissant un pôle supérieur et un pôle inférieur et destinée à contenir un gaz plus léger que le gaz présent dans l'atmosphère ambiante,

- un deuxième ballon, dit montgolfière solaire, comportant une enveloppe réalisée au moins partiellement en un matériau apte à absorber le rayonnement solaire et à émettre des rayonnements infrarouge à l'intérieur du volume qu'elle délimite de façon à chauffer le gaz renfermé, ladite enveloppe comprenant une extrémité, dite inférieure, comportant une ouverture permanente destinée au remplissage de la montgolfière par le gaz présent dans l'atmosphère ambiante.

Selon l'invention, cet aérostat se caractérise en ce que :

- la montgolfière solaire comprend une extrémité ouverte opposée à son extrémité inférieure et délimitée par une bordure annulaire de section supérieure à celle du ballon porteur,

- des moyens de maintien sont adaptés pour :

. maintenir la montgolfière autour du ballon porteur de façon que ledit ballon porteur s'étende partiellement à l'intérieur de l'enveloppe de ladite montgolfière,

. conférer un degré de liberté dans le sens radial à la bordure annulaire de la montgolfière par rapport à l'enveloppe du ballon porteur,

- une ceinture est disposée autour de la montgolfière en proximité de la bordure annulaire de cette dernière,

- des moyens de régulation sont adaptés pour faire varier la force de serrage de la ceinture entre une force de serrage maximale où ladite ceinture plaque la bordure annulaire de façon étanche sur l'enveloppe du ballon porteur et une force de serrage minimale où la ceinture confère un degré de liberté dans le sens radial à ladite bordure annulaire par rapport à ladite enveloppe du ballon porteur.

L'invention a donc consisté à réaliser un aérostat comportant un ballon porteur s'étendant partiellement à l'intérieur d'une montgolfière, et un système de clapet constitué par la bordure annulaire de la montgolfière. Ce système de clapet et ses moyens de régulation permettent de ceinturer de façon étanche la bordure annulaire de la montgolfière sur le ballon porteur, au sol et en cours d'ascension, de façon à préserver sa force ascensionnelle à cette montgolfière. Par contre en fin d'ascension, les forces de pression engendrées par l'air chaud contenu dans la montgolfière, liées à une diminution de la force de serrage, dégagent une ouverture par laquelle cet air chaud s'échappe. Par conséquent, la force ascensionnelle de la montgolfière se trouve dans un premier temps annulée, puis dans un deuxième temps négative du fait de l'échappement de l'air chaud.

Selon un premier mode de réalisation préférentiel, les moyens de régulation de la force de serrage de la ceinture comprennent des moyens de mesure de la tension de l'enveloppe du ballon porteur, et des moyens de serrage asservis aux moyens de mesure et adaptés pour moduler la force de serrage de façon que la surpression à l'intérieur dudit ballon porteur soit inférieure à une pression de consigne prédéterminée.

L'ouverture du système de clapet est donc déclenchée pour une pression de consigne prédéterminée dont la valeur sera choisie pour éviter tout risque de destruction par mise en surpression du ballon porteur.

Selon ce mode de réalisation, les mesures peuvent être effectuées directement au moyen de jauges de contraintes mesurant les contraintes longitudinales et transversales du ballon porteur. Elles peuvent également être effectuées indirectement, au moyen de capteurs, par des mesures de la surpression interne du ballon porteur, dont la valeur est liée à la tension de l'enveloppe en fonction de la forme de cette dernière.

La modulation de la force de serrage est en outre réalisée classiquement par un moteur agencé pour faire varier la longueur de la ceinture, et asservi aux moyens de mesure.

Une telle solution est particulièrement destinée à être utilisée pour des aérostats comportant un ballon porteur doté d'une enveloppe épaisse, notamment supérieure à 100 microns, susceptible de supporter des surpressions relativement importantes, supérieures à quelques centaines de pascals. En effet, pour des surpressions inférieures, les mesures délivrées par les capteurs ou les jauges sont relativement aléatoires et ne présentent pas une fiabilité suffisante compatible avec l'emploi d'enveloppes minces.

Selon un deuxième mode de réalisation, les moyens de régulation de la force de serrage de la ceinture sont adaptés pour faire varier ladite force de serrage en fonction de la position du pôle inférieur du ballon porteur par rapport au pôle supérieur dudit ballon.

En outre, des moyens de liaison sont disposés entre le pôle inférieur du ballon porteur et une charge portée par l'aérostat. Ces moyens de liaison ont pour but de créer une force engendrant l'éloignement du pôle inférieur du ballon porteur par rapport à son pôle supérieur lorsque le volume de gaz renfermé à l'intérieur de ce ballon diminue.

Ainsi, en fonction du taux de gonflage du ballon porteur, la distance entre pôles inférieur et supérieur varie notablement depuis une distance maximale correspondant à l'état de gonflage minimal de ce ballon, au sol, jusqu'à une distance minimale correspondant à la hauteur du ballon gonflé avec une surpression maximale admissible par les caractéristiques mécaniques de l'enveloppe.

Selon ce mode de réalisation, les moyens de régulation sont donc conçus pour utiliser l'énergie fournie par les variations de position de pôle inférieur soumis à une charge, pour agir sur le serrage de la ceinture.

Par ailleurs, selon une autre caractéristique de l'invention, les moyens de maintien de la montgolfière sur le ballon porteur comprennent un système de harnais apte à venir coiffer le ballon porteur et comportant une pluralité de rubans fixés vers une de leur extrémité sur le pourtour de la bordure annulaire de ladite montgolfière et, vers leur autre extrémité, à un pôle de raccordement central.

Ainsi, le ballon porteur et la montgolfière font l'objet de fabrications totalement séparées et le ballon porteur est donc réalisé sans autres interventions que celles nécessaires à sa fabrication, chose primordiale pour la fabrication d'un ballon à gaz surpressurisé.

Seule la montgolfière dont l'étanchéité n'est pas aussi critique que celle du ballon porteur subit toutes les interventions technologiques nécessaires à sa réalisation et à son fonctionnement.

Ensuite, le harnais réalisé au moyen de rubans et d'un pôle de raccordement, permet la fixation directe de la montgolfière sur le pôle supérieur de ballon porteur sans aucune intervention sur l'enveloppe de ce dernier.

D'autres caractéristiques, buts et avantages de l'invention ressortiront de la description détaillée qui suit en référence aux dessins annexés qui en représentent, à titre d'exemples non limitatifs, trois modes de réalisation préférentiels. Sur ces dessins qui font partie intégrante de la présente description :

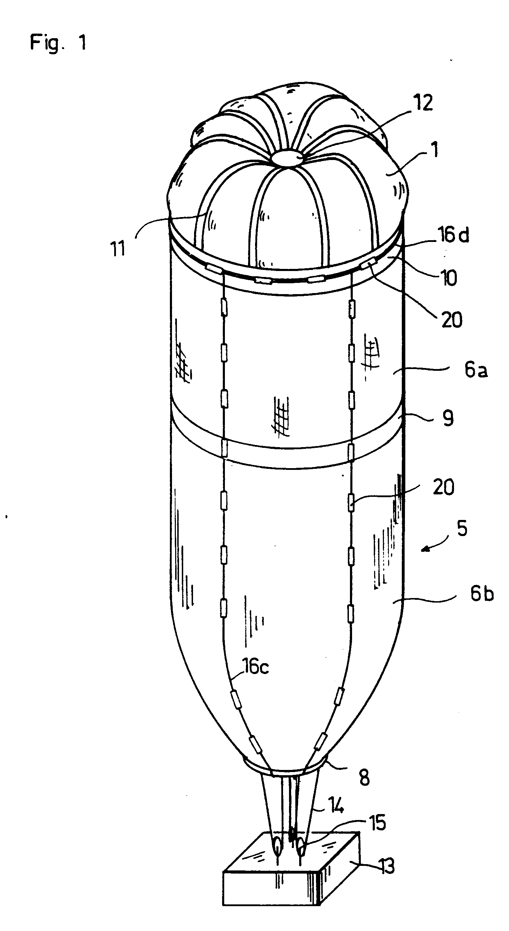

- la figure 1 est une vue en perspective d'un premier mode de réalisation d'un aérostat conforme à l'invention,

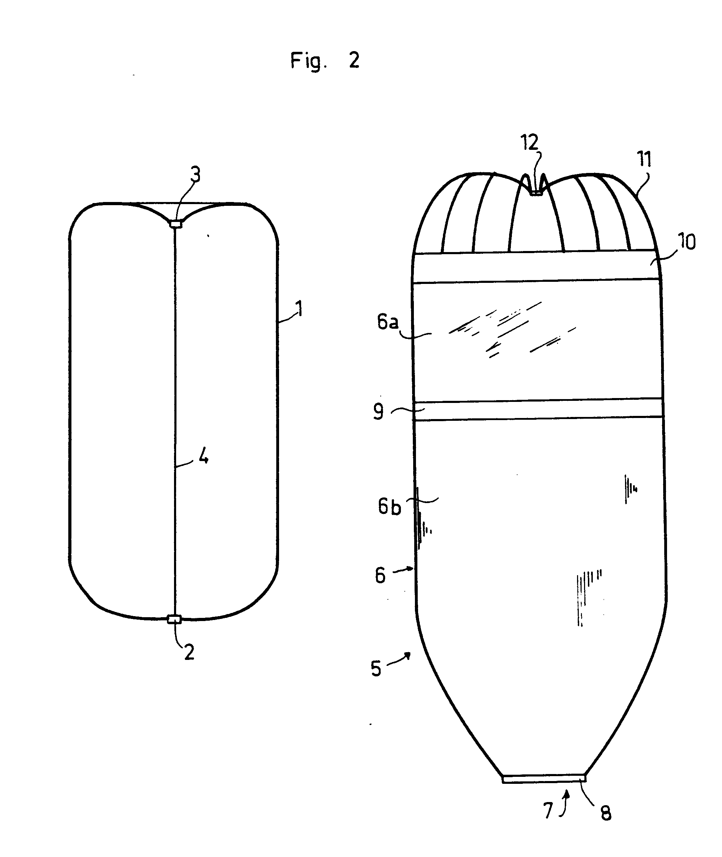

- la figure 2 est une vue schématique du ballon porteur et de la montgolfière constituant cet aérostat,
- les figures 3a et 3b sont des coupes schématiques partielles de ce premier mode de réalisation, illustrant les moyens d'accrochage de la charge et leur configuration lorsque l'aérostat se trouve respectivement au sol et en fin d'ascension,
- la figure 4a illustre la cinématique d'un câble de ceinturage de cet aérostat,
- la figure 4b illustre schématiquement la cinématique d'une variante de câble de ceinturage,
- la figure 5 est une coupe longitudinale de cet aérostat, lorsqu'il se trouve à proximité du sol, de nuit, un seul câble de ceinturage étant représenté,
- la figure 6 en est une coupe longitudinale lorsqu'il se trouve au sol, au lever du jour, un seul câble de ceinturage étant représenté,
- la figure 7 en est une coupe longitudinale en course d'ascension, un seul câble de ceinturage étant représenté,

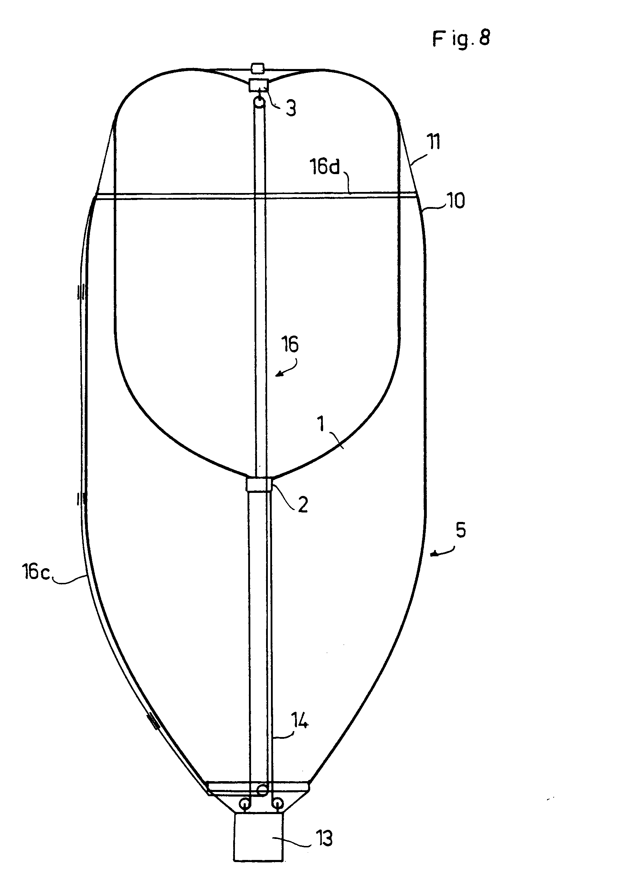

- la figure 8 en est une coupe longitudinale en fin d'ascension, un seul câble de ceinturage étant représenté,
- la figure 9a est une coupe longitudinale d'un deuxième mode de réalisation d'aérostat conforme à l'invention, dans sa position à proximité du sol,
- la figure 9b en est une coupe longitudinale en fin d'ascension,
- la figure 10a est une coupe longitudinale partielle d'un troisième mode de réalisation d'aérostat conforme à l'invention, dans sa position à proximité du sol,
- la figure 10b en est une coupe longitudinale partielle en fin d'ascension.

L'aérostat représenté aux figures est destiné à évoluer de façon réversible et autonome entre le sol d'une planète à atmosphère, telle que la Terre ou Mars, et une altitude plafond déterminée.

Cet aérostat comporte en premier lieu un ballon porteur 1 comprenant une enveloppe à symétrie de révolution autour d'un axe, dotée d'une portion sensiblement cylindrique et d'un pôle inférieur 2 et d'un pôle supérieur 3 situés sur l'axe de révolution.

Cette enveloppe est réalisée à partir de fuseaux rectangulaires en un film de polyester de 3,5 microns d'épaisseur, conformément au procédé décrit dans le brevet n° 80.00343 au nom du déposant. Cette enveloppe comporte, en outre, un lien interpolaire 4 reliant son pôle supérieur 3 à son pôle inférieur 2.

L'enveloppe de ce ballon porteur 1 renferme une masse de gaz ml plus léger que le gaz présent dans l'atmosphère. Cette masse de gaz ml est calculée de façon que le ballon porteur 1 présente :

- un état de plénitude à une altitude plafond prédéterminée, supérieure à l'altitude plafond prévue dans les conditions d'exploration, de façon que l'enveloppe ne soit jamais mise en surpression,
- un état de gonflage minimal au sol pour lequel :
    . la portion supérieure de l'enveloppe est sollicitée en tension circonférentielle,
    . il possède une portance suffisante pour maintenir l'aérostat au-dessus du sol et insuffisante pour entraîner le décollage de cet aérostat et de sa charge.

L'aérostat comporte, en second lieu, une deuxième enveloppe 5, dite montgolfière solaire, à symétrie de révolution autour d'un axe, comprenant une portion sensiblement cylindrique 6 et un fond aplati doté d'une ouverture permanente 7 délimitée par une pièce annulaire rigide 8.

Cette montgolfière 5 présente une portion supérieure cylindrique 6a en un matériau transparent au rayonnement solaire, et une portion inférieure cylindrique 6b en un matériau apte à absorber le rayonnement solaire. Ces deux portions 6a et 6b sont réalisées chacune par assemblage de fuseaux rectangulaires en un film de polyester de 3,5 microns, et sont assemblées entre elles au moyen d'une bande de raccordement 9. En outre, la face interne des fuseaux de la portion inférieure 6b est revêtue d'une pellicule métallisée, par exemple aluminisée.

La portion supérieure 6a de cette montgolfière 5 est par ailleurs dotée d'une extrémité supérieure ouverte, délimitée par une bordure annulaire constituée d'une collerette de raccordement 10 de diamètre supérieur à celui du ballon porteur 1.

La montgolfière comporte enfin des moyens de maintien sur le ballon porteur 1 comportant un harnais apte à venir coiffer ce ballon porteur. Ce harnais se compose d'une pluralité de rubans 11 fixés, vers une de leur extrémité, sur le pourtour de la collerette de raccordement 10 et, vers leur haute extrémité, sur un pôle de raccordement central 12.

Ce harnais permet de maintenir la montgolfière 5 autour du ballon porteur 1 dans une position où ce dernier s'étend partiellement à l'intérieur de cette montgolfière, tout en conférant un degré de liberté radial à ladite montgolfière par rapport audit ballon porteur. En outre, ce harnais est adapté pour que, dans la configuration de l'aérostat au sol, la collerette de raccordement 10 se trouve en regard d'une portion de l'enveloppe du ballon porteur 1 sollicitée en tension circonférentielle.

Cette disposition permet de faire jouer à cette collerette de raccordement 10 un rôle de "clapet", tel que décrit ci-dessous, au moyen d'une ceinture disposée autour de cette collerette, et de moyens de régulation de la force de serrage de cette ceinture.

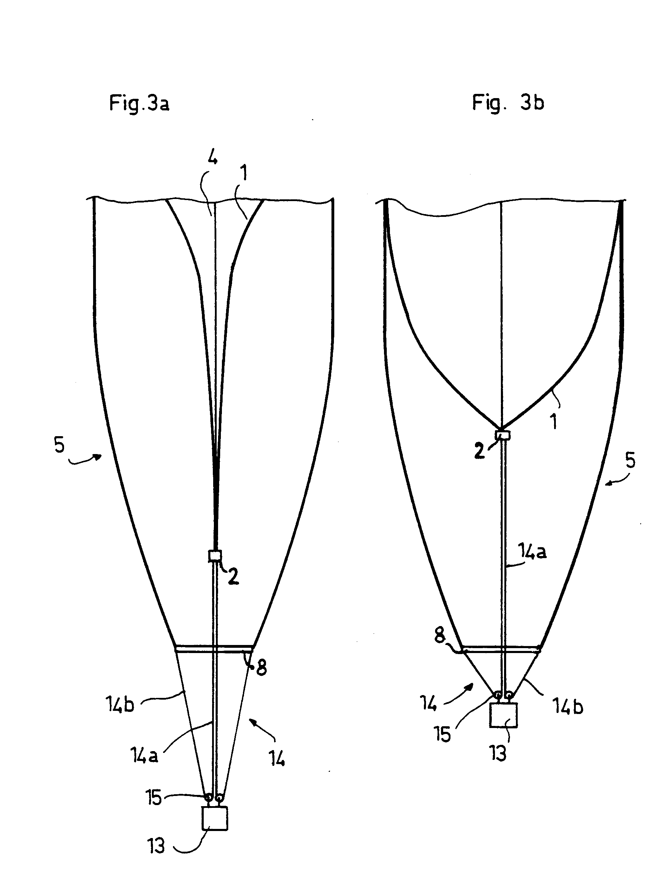

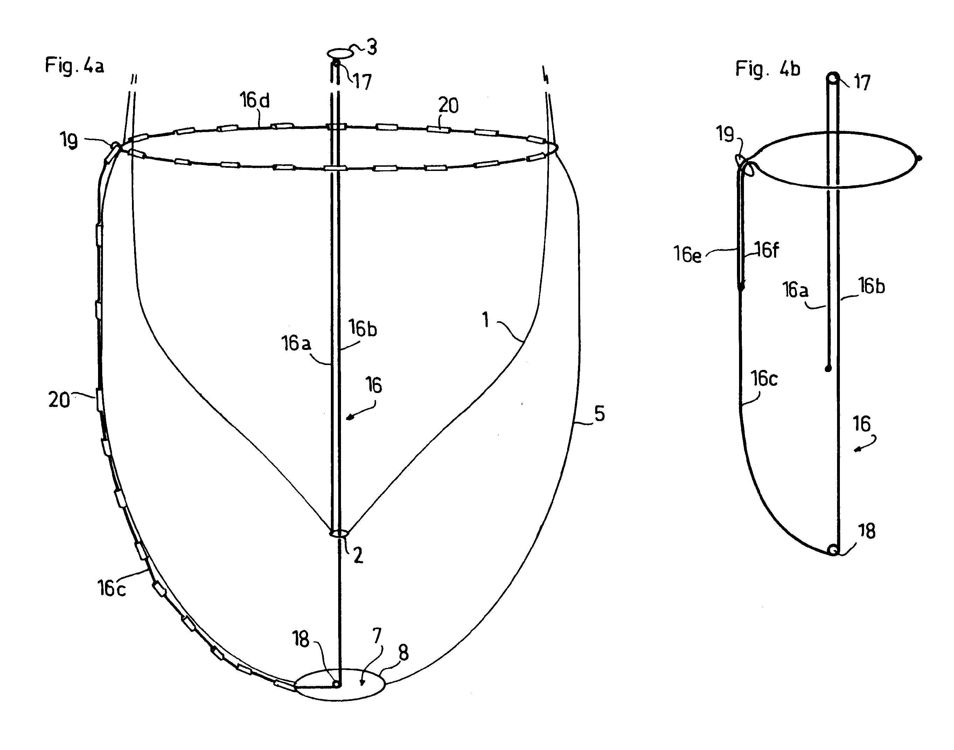

Un premier mode de réalisation de moyens d'actionnement de ce "clapet" est représenté aux figures 3a, 3b et 4a. En premier lieu, selon ce mode de réalisation, une charge 13 est suspendue sous l'aérostat par l'intermédiaire de câbles 14. Chacun de ces câbles 14 comporte un premier brin 14a s'étendant entre le pôle inférieur 2 du ballon porteur 1 et la charge 13, et un deuxième brin 14b s'étendant entre cette charge 13 et la pièce annulaire 8 de la montgolfière 5. La charge 13 est en outre soutenue par ces câbles 14 par l'intermédiaire d'organes de renvoi 15 de ces câbles, solidarisés à cette charge.

Le premier objet de ce système d'accrochage est de soumettre l'enveloppe 6 de la montgolfière à une tension, due au poids de la charge 13, destinée à éviter que cette enveloppe ne vienne se vider et obturer son ouverture permanente 7 lorsque l'aérostat se trouve à proximité du sol.

Le système d'accrochage de la charge 13 a en outre pour objet de soumettre le pôle inférieur du ballon porteur 1 au poids de cette charge et ainsi d'amener ce pôle inférieur à se déplacer le long de l'axe de révolution et à s'éloigner (ou se rapprocher) du pôle supérieur 3 lors des variations de volume du gaz contenu dans ce ballon (figures 3a, 3b).

Lors de ces déplacements, ce système d'accrochage constitue en effet une source d'énergie destinée à être utilisée pour assumer la fermeture ou l'ouverture du "clapet".

Tel que représenté à la figure 4a, cette fermeture et cette ouverture sont assurées au moyen de câbles 16 comportant :

- un premier brin 16a fixé vers une de ses extrémités au pôle inférieur 2 du ballon porteur 1, et s'étendant entre ledit pôle inférieur et le pôle supérieur 3 dudit ballon porteur,
- un deuxième brin 16b s'étendant entre le pôle supérieur 3 du ballon porteur 1 et l'ouverture permanente 7 de la montgolfière 5,
- un troisième brin 16c s'étendant le long de l'enveloppe 6 de la montgolfière 5 entre l'ouverture permanente 7 de cette dernière et la collerette de raccordement 10,
- et un quatrième brin 16d venant ceinturer l'enveloppe 6 de la montgolfière 5, au niveau de la collerette de raccordement 10, et dont l'extrémité est fixée sur un anneau de guidage 19.

En outre, pour chacun de ces câbles 16, deux organes de renvoi 17, 18 sont disposés respectivement au niveau du pôle supérieur 3 du ballon porteur 1 et de l'ouverture permanente 7 de la montgolfière 5.

Le guidage de chacun de ces câbles 16 est par ailleurs assuré par des manchons 20 solidarisés respectivement le long de l'enveloppe 6 de la montgolfière et sur le pourtour de la collerette de raccordement 10. Ainsi, par l'intermédiaire de ces câbles, l'énergie apportée par le système d'accrochage se transforme en une variation de la longueur de la ceinture constituée par les brins 16d, entraînant une fermeture ou une ouverture du "clapet".

Selon une variante représentée à la figure 4b, chaque câble 16 peut en outre être divisé, au moins sur une partie de sa longueur, en deux câbles séparés 16e, 16f agencés de façon à s'étendre chacun sur le demi-périmètre de la collerette de raccordement 10 et reliés l'un à l'autre vers leur extrémité.

Cette variante a pour avantage de permettre de doubler les variations de longueur de la ceinture par rapport à la solution précédente, pour un même déplacement du pôle inférieur 2 du ballon porteur.

Les divers éléments constitutifs de ce premier mode de réalisation et leur agencement ayant été décrits, ses caractéristiques de fonctionnement sont explicitées ci-après.

Cet aérostat est notamment destiné à être transporté au moyen d'un satellite puis parachuté à proximité de la planète Mars, en vue de l'exploration de cette dernière. Lors de ce parachutage, des moyens de gonflage du ballon porteur 1 en un gaz, tel que de l'hélium, plus léger que le gaz présent dans l'atmosphère permettront de remplir ce ballon porteur d'une masse de gaz prédéterminée. Le cycle d'évolution du ballon spatial entre le sol de la planète et une altitude plafond prédéterminée est ensuite le suivant.

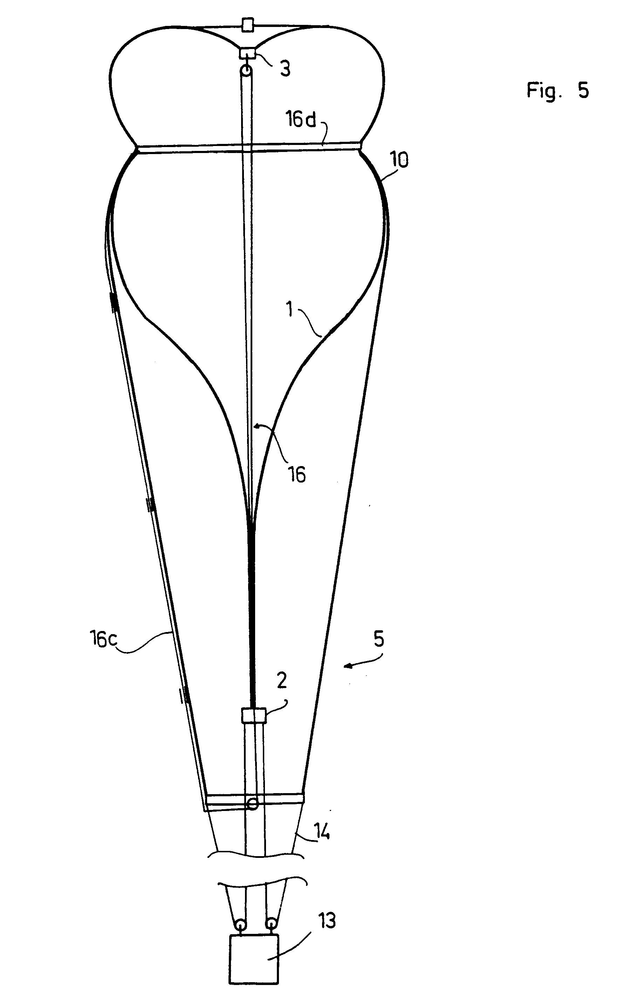

Durant la nuit, la température du gaz présent dans l'atmosphère et, par conséquent, du gaz contenu dans la montgolfière 5 est relativement faible. La montgolfière 5 ne produit donc pas de force ascensionnelle. L'aérostat se trouve alors à proximité du sol, grâce à la seule portance du ballon porteur 1, la charge 13 assurant la mise en tension de l'enveloppe 6 de la montgolfière 5 et le maintien d'un volume minimum de gaz dans cette dernière (figure 5).

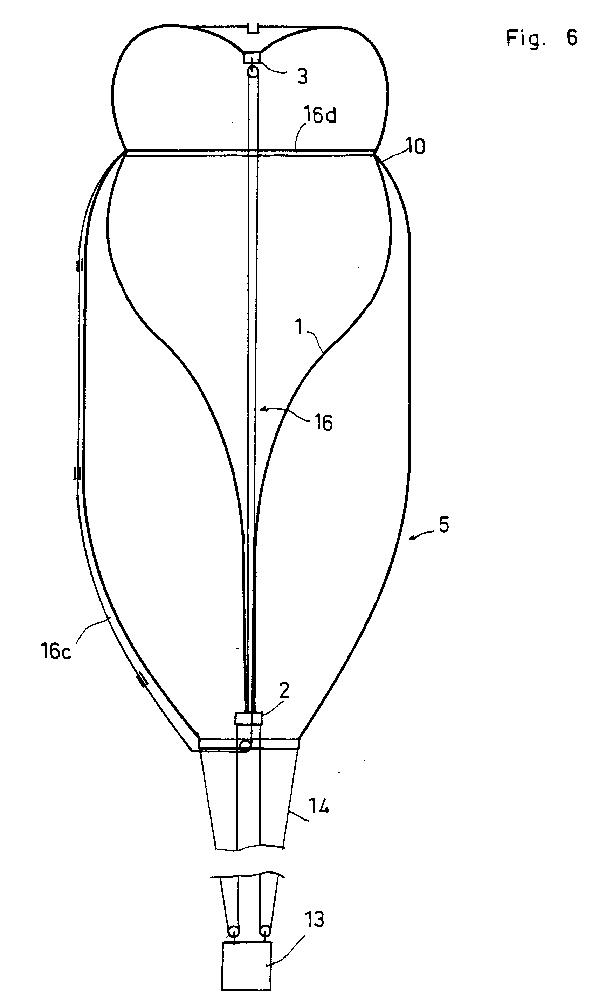

Dès le lever du jour, le moindre échauffement du gaz présent dans l'atmosphère entraîne un remplissage rapide de la montgolfière 5 grâce à son volume résiduel important. Cette dernière parvient donc rapidement à son état de plénitude et fournit une force ascensionnelle maximale pour le décollage et dans les basses couches (figure 6). Parallèlement, la force exercée par la masse d'air chaud tendant à monter dans la montgolfière 5 et à écarter la collerette de raccordement 10 du ballon porteur 1, est contrecarrée par la force de serrage des câbles de ceinturage 16 assurant l'étanchéité de cette montgolfière.

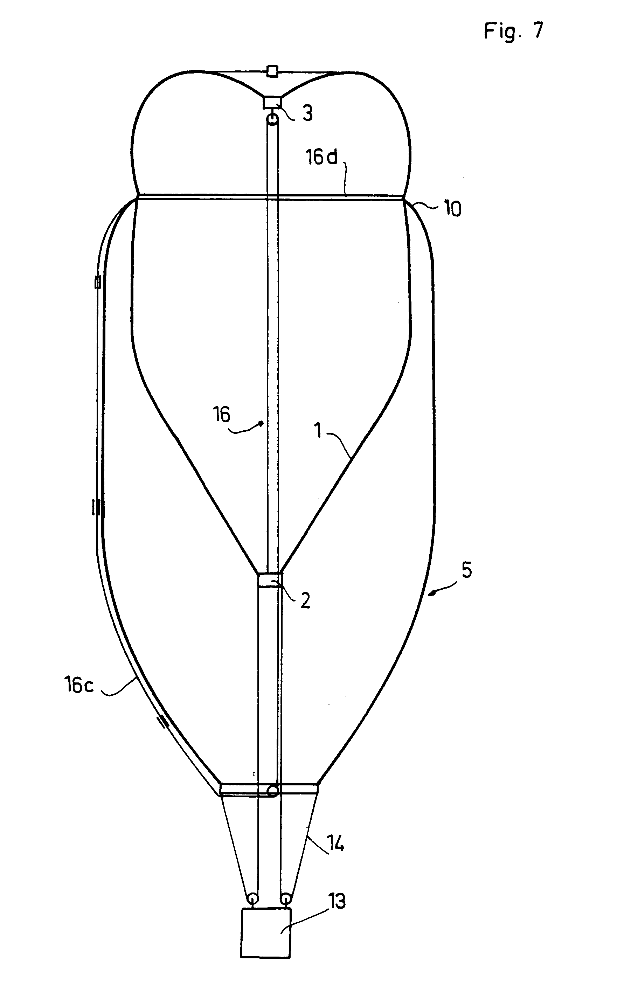

Au fur et à mesure de l'ascension de l'aérostat, le volume du ballon porteur 1 augmente du fait de la baisse de pression de l'atmosphère et, par conséquent, le volume de la montgolfière 5 diminue proportionnellement (figure 7). Sa force ascensionnelle diminue donc, et ce d'autant plus que l'échauffement du gaz est moindre lorsque le soleil se trouve au zénith du fait de l'absence de dôme. Parallèlement, la distance entre les pôles inférieur 2 et supérieur 3 du ballon porteur 1 diminue et par conséquent la force de serrage des câbles de ceinturage 16 diminue proportionnellement.

En fin d'ascension et pour la distance minimale entre pôles supérieur 3 et inférieur 2 du ballon porteur 1 correspondant à un état de plénitude maximal prédéterminé de ce ballon, la poussée de l'air chaud s'amassant entre la collerette de raccordement 10 et l'enveloppe du ballon porteur 1 devient supérieure à la force de serrage des câbles de ceinturage 16 et provoque une dilatation radiale de cette collerette. Par conséquent, la force ascensionnelle de la montgolfière se trouve dans un premier temps annulée, puis devient négative. Donc, dans un premier temps, l'ascension de l'aérostat s'arrête sans que le ballon porteur 1 ne soit mis en surpression, puis l'aérostat amorce une descente qui provoque la fermeture du "clapet" et oscille enfin entre deux altitudes tant que l'échauffement solaire reste important.

Enfin, lorsque le soleil décline, la température du gaz contenu dans la montgolfière 5 décroît progressivement, entraînant le serrage de la collerette de raccordement 10 sur le ballon porteur 1.

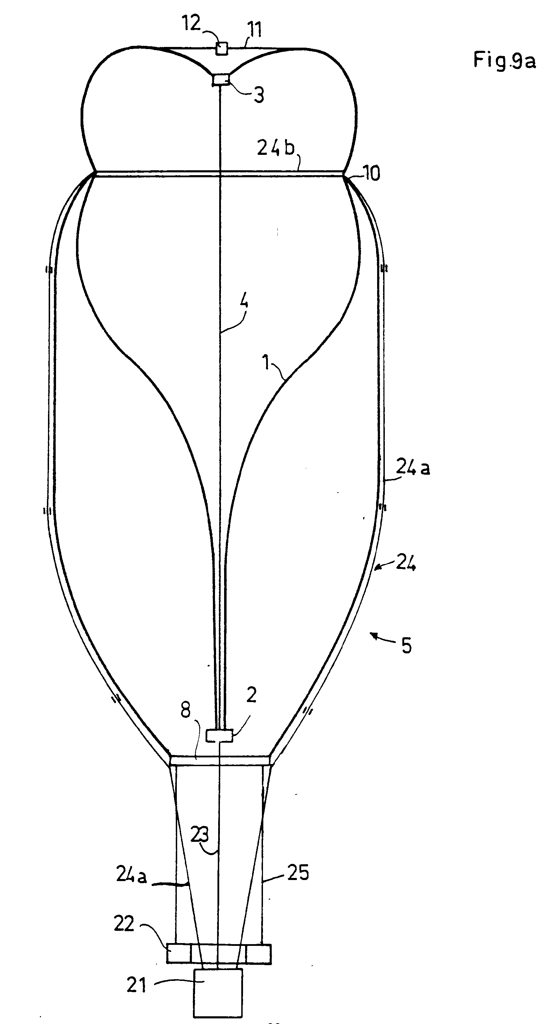

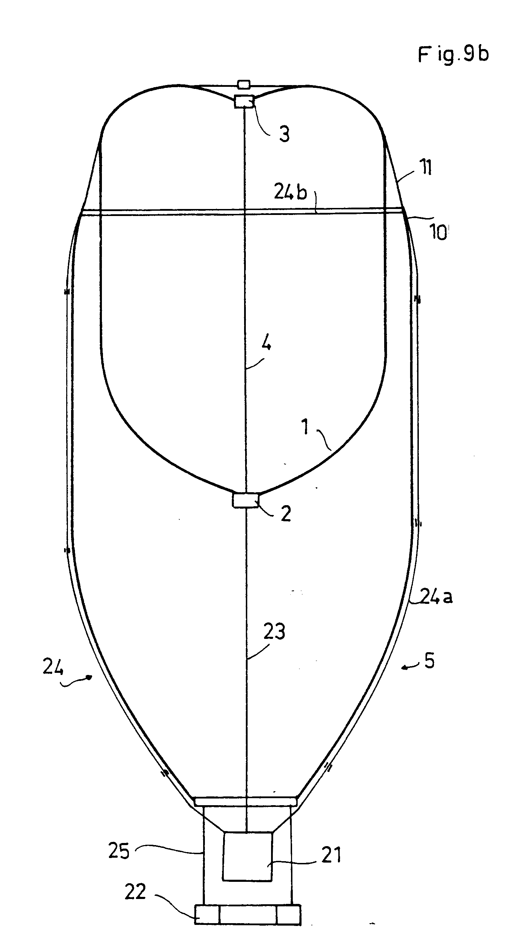

Les figures 9a et 9b représentent un deuxième mode de réalisation des moyens d'entraînement du "clapet". Selon ce mode de réalisation, deux charges 21 et 22 sont destinées à être supportées par l'aérostat. Le première de ces charges 21 est supportée, en premier lieu, au moyen de câbles 23 reliant ladite charge au pôle inférieur 2 du ballon porteur 1. Elle est également supportée par des câbles 24 comportant un premier brin 24a s'étendant le long de l'enveloppe 6 de la montgolfière 5, et un deuxième brin 24b venant ceinturer cette enveloppe au niveau de la collerette de raccordement 10.

Selon ce principe, la fermeture ou l'ouverture du "clapet" est commandée directement par les déplacements du pôle inférieur 2 du ballon porteur 1, correspondant aux variations de volume du gaz contenu dans ce ballon. En effet, dans la configuration au sol de l'aérostat, représentée à la figure 9a, correspondant à la distant maximale entre les pôles inférieur 2 et supérieur 3 du ballon porteur 1, le poids de la charge 21 est pris en compte d'égale façon par les câbles 23 et 24. Par contre, au fur et à mesure de l'ascension et notamment en fin d'ascension, tel que représenté à la figure 9b, la majorité de la charge 21 est supportée par les câbles 23. Par conséquent la tension dans les câbles 24 diminue, autorisant l'ouverture du "clapet" en fin d'ascension.

La deuxième charge 22 est quant à elle reliée au moyen de câbles 25 à la pièce annulaire 8 de la montgolfière 5 de façon à assurer la mise en tension, au sol, de cette montgolfière. Cette charge 22 présente en outre une forme annulaire délimitant une section interne supérieure à la section de la charge 21 afin de permettre les déplacements verticaux de cette dernière liés aux déplacements du pôle inférieur 2 du ballon porteur 1.

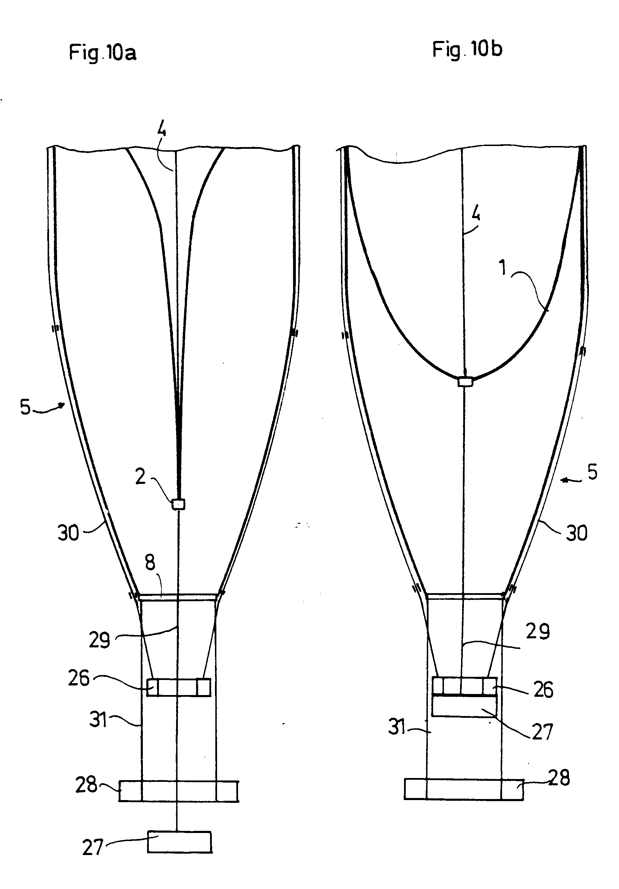

Les figures 10a et 10b représentent enfin un troisième mode de réalisation des moyens d'actionnement du "clapet". Selon ce mode de réalisation, trois charges 26, 27 et 28 sont destinées à être supportées par l'aérostat.

La première de ces charges 26 est directement supportée par des câbles de ceinturage 30 s'étendant le long de l'enveloppe 6 de la montgolfière 5 et se prolongeant, comme précédemment, de façon à ceinturer la collerette de raccordement 10. Cette charge 26 présente en outre une forme annulaire.

La deuxième charge 27, de section de dimensions supérieures à celles de la section interne de la charge 26, est quant à elle directement reliée par des cables 29 au pôle inférieur 2 du ballon porteur 1 de façon à subir les mêmes déplacements verticaux que ce dernier. La longueur des câbles 29 est en outre adaptée pour que cette charge 27 soit disposée en dessous de la charge 26 dans la configuration au sol de l'aérostat.

Comme précédemment, la fermeture ou l'ouverture du "clapet" sont dans ce cas commandées directement par les déplacements du pôle inférieur 2 du ballon porteur 1. En effet, dans la configuration au sol représentée à la figure 10a, le poids de la charge 26 est totalement supporté par les câbles de ceinturage 30, assurant une force de serrage maximale et parfaitement adaptée au serrage voulu car liée directement au poids de la charge 26. Par contre, en cours d'ascension et principalement en fin d'ascension, la montée du pôle inférieur 2 du ballon porteur 1 entraîne parallèlement une montée de la charge 27. Cette charge 27 vient donc en contact sous la charge 26 et soulage partiellement les câbles de ceinturage 30 du poids de cette charge, entraînant une diminution de la force de serrage (figure 10b).

Enfin, la troisième charge 28 est reliée au moyen de câbles 31 à la pièce annulaire 8 de la montgolfière 5 de façon à assurer la mise en tension au sol de cette montgolfière.

Il est à noter que les caractéristiques de fonctionnement des deuxième et troisième modes de réalisation d'aérostat décrits ci-dessus sont identiques à celles de l'aérostat décrit en premier lieu, hormis le principe d'ouverture et de fermeture du "clapet". En outre, les câbles de ceinturage peuvent, de même, être constitués d'un brin unique ou de deux brins parallèles au niveau de la collerette de raccordement 10.

## Revendications

1. Aérostat destiné à évoluer de façon autonome et réversible entre le sol d'une planète à atmosphère et une altitude plafond prédéterminée, du type ballon double comprenant :

   - un premier ballon (1), dit porteur, comportant une enveloppe fermée en un matériau transparent au rayonnement solaire, définissant un pôle supérieur (3) et un pôle inférieur (2) et destinée à contenir un gaz plus léger que le gaz présent dans l'atmosphère ambiante,
   - un deuxième ballon (5), dit montgolfière solaire, comportant une enveloppe (6) réalisée au moins partiellement en un matériau apte à absorber le rayonnement solaire et à émettre des rayonnements infrarouge à l'intérieur du volume qu'elle délimite de façon à chauffer le gaz renfermé, ladite enveloppe comprenant une extrémité, dite inférieure, comportant une ouverture permanente (7) destinée au remplissage de la montgolfière (5) par le gaz présent dans l'atmosphère ambiante,

   ledit aérostat étant caractérisé en ce que :
   - la montgolfière solaire (5) comprend une extrémité ouverte opposée à son extrémité inférieure et délimitée par une bordure annulaire (10) de section supérieure à celle du ballon porteur (1),
   - des moyens de maintien (11, 12) sont adaptés pour :

     . maintenir la montgolfière (5) autour du ballon porteur (1) de façon que ledit ballon porteur s'étende partiellement à l'intérieur de l'enveloppe (6) de ladite montgolfière,
     . conférer un degré de liberté dans le sens radial à la bordure annulaire (10) de la montgolfière (5) par rapport à l'enveloppe du ballon porteur (1),
   - une ceinture (16d ; 16e, 16f ; 24b ; 30) est disposée autour de la montgolfière (15) en proximité de la bordure annulaire (10) de cette dernière,
   - des moyens de régulation (16; 23, 24 ; 29, 30) sont adaptés pour faire varier la force de serrage de la ceinture (16d ; 16e, 16f ; 30) entre une force de serrage maximale où ceinture plaque la bordure annulaire (10) de façon étanche sur l'enveloppe du ballon porteur (1) et une force de serrage minimale où la ceinture confère un degré de liberté dans le sens radial à ladite bordure annulaire par rapport à ladite enveloppe du ballon porteur.

2. Aérostat selon la revendication 1, caractérisé en ce que les moyens de maintien de la montgolfière (5) sur le ballon porteur (1) comprennent un système de harnais apte à venir coiffer le ballon porteur (1) et comportant une pluralité de rubans (11) fixés vers une de leur extrémité sur le pourtour de la bordure annulaire (10) de ladite montgolfière et, vers leur autre extrémité, à un pôle de raccordement central (12).

3. Aérostat selon l'une des revendications 1 ou 2, caractérisé en ce que la montgolfière (5) comporte une première portion d'enveloppe, dite supérieure (6a), s'étendant à partir de la bordure annulaire (10), réalisée en un matériau transparent au rayonnement solaire, et une deuxième portion d'enveloppe, dite inférieure (6b), réalisée en un matériau apte à absorber le rayonnement solaire.

4. Aérostat selon l'une des revendications 1 à 3, dans lequel :

   - le ballon porteur (1) comporte une enveloppe à symétrie de révolution autour d'un axe, comportant une portion sensiblement cylindrique et un pôle supérieur (3) et un pôle inférieur (2) situés sur l'axe de révolution,
   - la montgolfière solaire (5) est constituée d'une enveloppe (6) à symétrie de révolution autour d'un axe comportant une portion sensiblement cylindrique et un fond doté d'une ouverture permanente (7).

5. Aérostat selon l'une des revendications 1 à 4, caractérisé en ce que les moyens de régulation de la force de serrage de la ceinture comprennent des moyens de mesure de la tension de l'enveloppe du ballon porteur (1), et des moyens de serrage asservis aux moyens de mesure et adaptés pour moduler la force de serrage de façon que la surpression à l'intérieur dudit ballon porteur soit inférieure à une pression de consigne prédéterminée.

6. Aérostat selon l'une des revendications 1 à 4, caractérisé en ce que :

   - des moyens de liaison (14 ; 23 ; 29) sont disposés entre le pôle inférieur (2) du ballon porteur (1) et une charge (13 ; 21 ; 27) destinée à être portée par ledit aérostat,
   - les moyens de régulation (16 ; 23, 24 ; 29, 30) de la force de serrage de la ceinture (16d ; 16e, 16f ; 24b ; 30) sont adaptés pour faire varier ladite force de serrage en fonction de la position du pôle inférieur (2) du ballon porteur (1) par rapport au pôle supérieur (3) dudit ballon.

7. Aérostat selon la revendication 6, caractérisé en ce que :

   - les moyens de liaison comprennent au moins un câble (14) comportant un premier brin (14a) s'étendant entre le pôle inférieur (2) du ballon porteur (1) et la charge (13), et un deuxième brin (14b) s'étendant entre ladite charge et une pièce annulaire (8) délimitant l'ouverture permanente (7) de la montgolfière (5) et, pour chaque câble (14), un organe de renvoi (15) solidarisé à la charge (13),

- les moyens de régulation de la force de serrage de la ceinture (16d ; 16e, 16f) comprennent :

. au moins un câble (16) comportant :

&ast; un premier brin (16a) fixé vers une de ses extrémités au pôle inférieur (2) du ballon porteur (1), et s'étendant entre ledit pôle inférieur et le pôle supérieur (3) dudit ballon porteur,

&ast; un deuxième brin (16b) s'étendant entre le pôle supérieur (3) du ballon porteur (1) et l'ouverture permanente (7) de la montgolfière (5),

&ast; et un troisième brin (16c) s'étendant le long de l'enveloppe (6) de la montgolfière (5) entre l'ouverture permanente (7) de cette dernière et la ceinture (16d ; 16e, 16f),

. et, pour chaque câble (16), deux organes de renvoi (17, 18) disposés respectivement au niveau du pôle supérieur (3) du ballon porteur (1) et au niveau de l'ouverture permanente (7) de la montgolfière (5).

8. Aérostat selon la revendication 6 adapté pour porter deux charges (21, 22) séparées, et caractérisé en ce que :

- les moyens de régulation de la force de serrage comprennent :

. au moins un câble (23) s'étendant entre le pôle inférieur (2) du ballon porteur (1) et une des charges (21) et faisant également office de moyen de liaison entre lesdits pôle inférieur et charge,

. au moins un câble (24) s'étendant le long de l'enveloppe (6) de la montgolfière (5) et reliant la charge précitée (21) et la ceinture (24b),

- la deuxième charge (22) est portée par une pièce annulaire (8) délimitant l'ouverture permanente (7) de la montgolfière (5) au moyen d'au moins un câble (25) s'étendant dans le prolongement de ladite montgolfière et reliant lesdites pièce annulaire (8) et charge (22).

9. Aérostat selon la revendication 6 adapté pour porter trois charges (26, 27, 28) séparées, une desdites charges (26), dite charge de butée, présentant une forme annulaire délimitant une section interne de passage, et une autre desdites charges (27), dite de régulation, présentant une section supérieure à la section interne de la charge de butée (26), ledit aérostat étant caractérisé en ce que :

- les moyens de régulation de la force de serrage de la ceinture comprennent :

. au moins un câble (30) s'étendant le long de l'enveloppe (6) de la montgolfière (5) et reliant la charge de butée (26) à la ceinture,

. au moins un câble (29) s'étendant entre le pôle inférieur (2) du ballon porteur (1) et la charge de régulation (27) et faisant également office de moyen de liaison entre lesdits pôle inférieur et charge de régulation, ledit câble étant de longueur adaptée pour que la charge de régulation (27) soit disposée sous la charge de butée (26) dans la position basse du pôle inférieur (2) du ballon porteur (1), et vienne en contact sous ladite charge de butée pour une position prédéterminée dudit pôle inférieur par rapport au pôle supérieur (3) du ballon porteur (1).

10. Aérostat selon l'une des revendications 7 à 9, caractérisé en ce que chaque câble (16c ; 24a ; 30) s'étendant le long de la montgolfière (5) se prolonge au niveau de la bordure annulaire (10) de la montgolfière de façon à ceinturer ladite bordure annulaire et faire office de ceinture de serrage.

11. Aérostat selon la revendication 10, caractérisé en ce que chaque câble (16c ; 24a ; 30) s'étendant le long de la montgolfière (5) est séparé, au moins partiellement au niveau de la bordure annulaire (10) de ladite montgolfière, en deux brins (16e, 16f) s'étendant chacun sur le demi-périmètre de ladite bordure annulaire, et reliés l'un à l'autre vers leur extrémité.

**Patentansprüche**

1. Aerostatischer Ballon, bestimmt zu selbständigem und umsteuerbarem Betrieb zwischen dem Boden eines Planeten mit Atmosphäre und einer im voraus bestimmten Maximalhöhe, in Art eines Doppelballons umfassend :

- einen ersten Ballon (1), den sogenannten Trägerballon, mit einer geschlossenen Hülle aus einem für Sonnenstrahlung durchlässigen Material, die einen oberen Pol (3) und einen unteren Pol (2) abgrenzt und bestimmt ist, ein Gas einzuschließen, das leichter ist als das in der Umgebungsatmosphäre gegenwärtige Gas,

- einen zweiten Ballon (5), den sogenannten solaren Montgolfierballon, mit einer Hülle (6), die mindestens zum Teil aus einem Material besteht, das in der Lage ist, die Sonnenstrahlung zu absorbieren und innerhalb des von ihm abgegrenzten Raumes infrarote Strahlen abzugeben, um das eingeschlossene Gas zu erhitzen, wobei die besagte Hülle ein Ende, das sogenannte untere Ende, mit einer permanenten Öffnung (7) umfaßt, die zum Füllen des Montgolfierballons (5) mit dem in der Umgebungsatmosphäre gegenwärtigen Gas bestimmt ist,

wobei der besagte aerostatische Ballon dadurch gekennzeichnet ist,

- daß der solare Montgolfierballon (5) ein offenes Ende umfaßt, das seinem unteren Ende gegenüberliegt und durch einen ringförmigen Rand (10) mit einem Querschnitt, der größer ist als der des Trägerballons (1), abgegrenzt ist,

- daß Haltemittel (11, 12) so beschaffen sind,
. daß sie den Montgolfierballon (5) rings um den Trägerballon (1) festhalten, und zwar so, daß sich der besagte Trägerballon teilweise im Inneren der Hülle (6) des besagten Montgolfierballons erstreckt,
. daß sie dem ringförmigen Rand (10) des Montgolfierballons (5) im Verhältnis zu der Hülle des Trägerballons (1) eine gewisse Freiheit in radialer Richtung vermitteln,

- daß eine Halterung (16d; 16e, 16f; 24b; 30) rings um den Montgolfierballon (5) in Nähe von dessen ringförmigem Rand (10) angeordnet ist,

- daß Mittel zur Regelung (16; 23, 24; 29, 30) so beschaffen sind, daß sie die Spannkraft der Halterung (16d; 16e, 16f; 24b; 30) zwischen einer maximalen Spannkraft, in der die besagte Halterung den ringförmigen Rand (10) auf dichte Weise an der Hülle des Trägerballons (1) anpreßt, und einer Mindestspannkraft, in der die Halterung dem besagten ringförmigen Rand im Verhältnis zu der besagten Hülle des Trägerballons eine gewisse Freiheit in radialer Richtung vermittelt.

2. Aerostatischer Ballon nach Anspruch 1, dadurch gekennzeichnet, daß die Mittel, die den Montgolfierballon (5) an dem Trägerballon (1) festhalten, ein Gurtwerk umfassen, das in der Lage ist, den Trägerballon (1) zu bedecken und eine Mehrzahl von Bändern (11) umfaßt, die an einem ihrer Enden an dem Umfang des ringförmigen Randes (10) des besagten Montgolfierballons und an ihrem anderen Ende an einem mittigen Anschlußpol (12) befestigt sind.

3. Aerostatischer Ballon nach einem der Ansprüche 1 oder 2, dadurch gekennzeichnet, daß Montgolfierballon (5) einen ersten Hüllenabschnitt, den sogenannten oberen Hüllenabschnitt (6a), umfaßt, der sich von dem ringförmigen Rand (10) aus erstreckt und aus einem für Sonnenstrahlung durchlässigen Material besteht, sowie einen zweiten Hüllenabschnitt, den sogenannten unteren Hüllenabschnitt (6b) aus einem Material, das in der Lage ist, die Sonnenstrahlung zu absorbieren.

4. Aerostatischer Ballon nach einem der Ansprüche 1 bis 3, bei dem :
- Trägerballon (1) eine Hülle mit Rotationssymmetrie um eine Achse umfaßt, und zwar mit einem im wesentlichen zylindrischen Abschnitt sowie mit einem oberen Pol (3) und einem unteren Pol (2), die sich auf der Rotationsachse befinden,
- der solare Montgolfierballon (5) aus einer Hülle (6) mit Rotationssymmetrie um eine Achse besteht, die einen im wesentlichen zylindrischen Abschnitt und einen mit einer permanenten Öffnung (7) versehenen Boden umfaßt.

5. Aerostatischer Ballon nach einem der Ansprüche 1 bis 4, dadurch gekennzeichnet, daß die Mittel zur Regelung der Spannkraft der Halterung Mittel zum Messen der Zugspannung der Hülle von Trägerballon (1) umfassen, sowie Spannmittel, die durch die Mittel zum Messen gesteuert werden und so beschaffen sind, daß sie die Spannkraft so modulieren, daß der Überdruck im Inneren des besagten Trägerballons geringer ist als ein vorbestimmter Solldruck.

6. Aerostatischer Ballon nach einem der Ansprüche 1 bis 4, dadurch gekennzeichnet,
- daß Verbindungsmittel (14; 23; 29) zwischen dem unteren Pol (2) des Trägerballons (1) und einer durch den besagten aerostatischen Ballon zu befördernden Last (13; 21; 27) vorgesehen sind;
- daß die Mittel (16; 23, 24; 29, 30) zur Regelung der Spannkraft der Halterung (16d; 16e, 16f; 24b; 30) so beschaffen sind, daß sie die besagte Spannkraft in Abhängigkeit von der Lage des unteren Pols (2) von Trägeiballon (1) im Verhältnis zu dem oberen Pol (3) des besagten Ballons variieren.

7. Aerostatischer Ballon nach Anspruch 6, dadurch gekennzeichnet,
- daß die Verbindungsmittel mindestens ein Kabel (14) mit einem ersten Strang (14a) umfassen, der sich zwischen dem unteren Pol (2) von Trägerballon (1) und der Last (13) erstreckt, sowie einen zweiten Strang (14b), der sich zwischen der besagten Last und einem ringförmigen, die permanente Öffnung (7) des Montgolfierballons (5) abgrenzenden Teil (8) erstreckt, und, für jedes Kabel (14) eine Umsteuervorrichtung (15), die mit der Last (13) fest verbunden ist,

- daß Mittel zur Regelung der Spannkraft der Halterung (16d; 16e, 16f) die folgenden Teile umfassen :

. mindestens ein Kabel (16) umfassend :

* einen ersten Strang (16a), der an einem seiner Enden an dem unteren Pol (2) von Trägerballon (1) angebracht ist und sich zwischen dem besagten unteren Pol und dem oberen Pol (3) des besagten Trägerballons erstreckt,

* einen zweiten Strang (16b), der sich zwischen dem oberen Pol (3) von Trägerballon (1) und der permanenten Öffnung (7) des Montgolfierballons (5) erstreckt,

* und einen dritten Strang (16c), der sich entlang der Hülle (6) von Montgolfierballon (5) zwischen deren permanenter Öffnung (7) und Halterung (16d; 16e, 16f) erstreckt,

. sowie, für jedes Kabel (16), zwei Umsteuervorrichtungen (17, 18), die in Höhe des oberen Pols (3) von Trägerballon (1) bzw. in Höhe der permanenten Öffnung (7) von Montgolfierballon (5) angeordnet sind.

8. Aerostatischer Ballon nach Anspruch 6, der so beschaffen ist, daß er zwei getrennte Lasten (21, 22) trägt und dadurch gekennzeichnet,

- daß die Mittel zur Regelung der Spannkraft folgende Teile umfassen:

. mindestens ein Kabel (23), das sich zwischen dem unteren Pol (2) von Trägerballon (1) und einer der Lasten (21) erstreckt und gleichzeitig als Verbindungsmittel zwischen dem besagten unteren Pol und der besagten Last dient,

. mindestens ein Kabel (24), das sich entlang der Hülle (6) von Montgolfierballon (5) erstreckt und die vorgenannte Last (21) mit Halterung (24b) verbindet,

- daß die zweite Last (22) durch ein ringförmiges Teil (8) getragen wird, das die permanente Öffnung (7) von Montgolfierballon (5) abgrenzt, und zwar mittels mindestens eines Kabels (25), das sich in der Verlängerung des besagten Montgolfierballons erstreckt und das besagte ringförmige Teil (8) mit Last (22) verbindet.

9. Aerostatischer Ballon nach Anspruch 6, der so beschaffen ist, daß er drei getrennte Lasten (26, 27, 28) trägt, wobei eine der besagten Lasten, (26), die sogenannte Anschlaglast, eine ringförmige Form hat, die einen inneren Durchgangsquerschnitt abgrenzt, während eine andere der besagten Lasten, (27), die sogenannte Regellast, einen Querschnitt aufweist, der größer ist als der Innenquerschnitt der Anschlaglast (26), wobei der besagte aerostatische Ballon dadurch gekennzeichnet ist,

- daß die Mittel zur Regelung der Spannkraft der Halterung folgende Teile umfassen :

. mindestens ein Kabel (30), das sich entlang der Hülle (6) von Montgolfierballon (5) erstreckt und Anschlaglast (26) mit der Halterung verbindet,

. mindestens ein Kabel (29), das sich zwischen dem unteren Pol (2) von Trägerballon (1) und Regellast (27) erstreckt und gleichzeitig als Verbindung zwischen dem besagten unteren Pol und der Regellast dient, wobei die Länge des besagten Kabels so beschaffen ist, daß sich Regellast (27) in der niedrigen Lage des unteren Pols (2) von Trägerballon (1) unterhalb der Anschlaglast (26) befindet und in einer vorbestimmten Lage des besagten unteren Pols im Verhältnis zu dem oberen Pol (3) von Trägerballon (1) mit der Unterseite der besagten Anschlaglast in Berührung kommt.

10. Aerostatischer Ballon nach einem der Ansprüche 7 bis 9, dadurch gekennzeichnet, daß jedes sich entlang des Montgolfierballons (5) erstreckende Kabel (16c; 24a; 30) in Höhe des ringförmigen Randes (10) des Montgolfierballons verlängert ist, so daß es den besagten ringförmigen Rand umgibt und als Spannhalterung dient.

11. Aerostatischer Ballon nach Anspruch 10, dadurch gekennzeichnet, daß jedes sich entlang des Montgolfierballons (5) erstreckende Kabel (16c; 24a; 30) in Höhe des ringförmigen Randes (10) des besagten Montgolfierballons mindestens teilweise in zwei Stränge (16e, 16f) unterteilt ist, von denen sich jeder entlang des halben Umfangs des besagten ringförmigen Randes erstreckt und die miteinander an deren Ende verbunden sind.

**Claims**

1. Aerostatic balloon intended to operate in self-governing and reversible manner between the ground of a planet having an atmosphere and a predetermined maximum altitude, of twin-balloon type comprising :
- a first balloon (1), the so-called carrier balloon, comprising a closed envelope made from a material transparent to the solar radiation and defining an upper pole (3) and a lower pole (2) and intended to contain a gas lighter than the gas present in the ambient atmosphere,
- a second balloon (5), the so-called solar Montgolfier balloon, comprising an envelope (6) made at least partly from a material capable of absorbing the solar radiation and of emitting infra-red rays within the space delimited by it so as to heat the enclosed gas, said envelope comprising an end, the so-called lower end, with a permanent aperture (7) intended for filling Montgolfier balloon (5) with the gas present in the ambient atmosphere,
said aerostatic balloon being characterised in that :
- solar Montgolfier balloon (5) comprises an open end which is opposite its lower end and delimited by an annular edge (10), the cross-section of which is larger than that of carrier balloon (1),
- holding means (11, 12) are so designed
    . as to hold Montgolfier balloon (5) about carrier balloon (1) in such a way as to ensure that said carrier balloon extends partly within envelope (6) of said Montgolfier balloon,
    . as to confer, in relation to the envelope of carrier balloon (1), a certain freedom in the radial direction to annular edge (10) of Montgolfier balloon (5),
- a surround (16d; 16e, 16f; 24b; 30) is arranged about Montgolfier balloon (5) in proximity of annular edge (10) of the latter,
- regulating means (16; 23, 24; 29, 30) are so designed as to cause the gripping force of the surround (16d; 16e, 16f; 24b; 30) to vary between a maximum gripping force in which said surround positions annular edge (10) tightly on the envelope of carrier balloon (1) and a minimum gripping force in which the surround confers, in relation to said envelope of the carrier balloon, a certain freedom in the radial direction to said annular edge.

2.  Aerostatic balloon according to claim 1, characterised in that the means for holding Montgolfier balloon (5) on carrier balloon (1) comprise a harness system so designed as to cover carrier balloon (1) and comprising a plurality of tapes (11) attached at one of their ends to the periphery of annular edge (10) of said Montgolfier balloon and at their other end to a central connecting pole (12).

3.  Aerostatic balloon according to one of claims 1 or 2, characterised in that Montgolfier balloon (5) comprises a first envelope section, the so-called upper section (6a), extending from annular edge (10) and made from a material transparent to solar radiation and a second envelope section, the so-called lower section (6b), made from a material capable of absorbing the solar radiation.

4.  Aerostatic balloon according to one of claims 1 to 3 in which
    - carrier balloon (1) comprises an envelope with rotation symmetry about an axis, said envelope having a substantially cylindrical section as well as an upper pole (3) and a lower pole (2) located on the axis of revolution,
    - solar Montgolfier balloon (5) consists of an envelope (6) with rotation symmetry about an axis, said envelope having a substantially cylindrical section and a base endowed with a permanent aperture (7).

5.  Aerostatic balloon according to one of claims 1 to 4, characterised in that the means for regulating the gripping force of the surround comprise means for measuring the tension of the envelope of carrier balloon (1) as well as gripping means controlled by measuring means and so designed as to modulate the gripping force in such a way as to ensure that the excess pressure within said carrier balloon is smaller than a preset design pressure.

6.  Aerostatic balloon according to one of claims 1 to 4, characterised in that :
    - connecting means (14; 23; 29) are arranged between lower pole (2) of carrier balloon (1) and a load (13; 21; 27) which is to be carried by said aerostatic balloon,
    - the means (16; 23, 24; 29, 30) for regulating the gripping force of the surround (16d; 16e, 16f; 24b; 30) are so designed as to cause said gripping force to vary as a function of the position of lower pole (2) of carrier balloon (1) in relation to upper pole (3) of said balloon.

7.  Aerostatic balloon according to claim 6, characterised in that :
    - the connecting means comprise at least one cable (14) with a first strand (14a) extending between lower pole (2) of carrier balloon (1) and load (13) and a second strand (14b) extending between said load and an annular part (8) delimiting permanent aperture (7) of Montgolfier balloon (5) as well as, for each cable (14), a reversing device (15) firmly connected with load (13),
    - the means for regulating the gripping force of surround (16d; 16e, 16f) comprise :
- at least one cable (16) with
  * a first strand (16a) attached at one of its ends to lower pole (2) of carrier balloon (1) and extending between said lower pole and upper pole (3) of said carrier balloon,
  * a second strand (16b) extending between upper pole (3) of carrier balloon (1) and permanent aperture (7) of Montgolfier balloon (5),
  * and a third strand (16 c) extending along envelope (6) of Montgolfier balloon (5) between permanent aperture (7) of the latter and surround (16d; 16e, 16f),
- and, for each cable (16), two reversing devices (17, 18) arranged respectively at the level of upper pole (3) of carrier balloon (1) and at the level of permanent aperture (7) of Montgolfier balloon (5).

8. Aerostatic balloon according to claim 6 so designed as to carry two separate loads (21, 22) and characterised in that :
    - the means for regulating the gripping force comprise :
      - at least one cable (23) extending between lower pole (2) of carrier balloon (1) and one of charges (21), said cable serving equally as a means for connecting said lower pole with said load,
      - at least one cable (24) extending along envelope (6) of Montgolfier balloon (5) and connecting said load (21) with surround (24b),
    - second load (22) is carried by an annular part (8) delimiting permanent aperture (7) of Montgolfier balloon (5), by means of at least one cable (25) extending in extension of said Montgolfier balloon and linking said annular part (8) with load (22).

9. Aerostatic balloon according to claim 6, so designed as to carry three separate loads (26, 27, 28), whereby one of said loads (26), the so-called abutment load, has an annular shape delimiting an internal passing section and another of said loads (27), the so-called regulating load, has a cross-section larger than the inner section of abutment load (26), said aerostatic balloon being characterised in that :
    - the means for regulating the gripping force of the surround comprise :
      - at least one cable (30) extending along envelope (6) of Montgolfier balloon (5) and connecting abutment load (26) with the surround,
      - at least one cable (29) extending between lower pole (2) of carrier balloon (1) and regulating load (27) while also serving as a means for connecting said lower pole with said regulating load, whereby said cable, the length of which is such as to ensure that regulating load (27) is located below abutment load (26) when lower pole (2) of carrier balloon (1) is in its low position and comes into contact with the underside of said abutment load when said lower pole is in a predetermined position in relation to upper pole (3) of carrier balloon (1).

10. Aerostatic balloon according to one of claims 7 to 9, characterised in that each cable (16c; 24a; 30) extending along Montgolfier balloon (5) extends to the level of annular edge (10) of the Montgolfier balloon so as to encompass said annular edge and serve by way of gripping surround.

11. Aerostatic balloon according to claim 10, characterised in that each cable (16c; 24a; 30) extending along Montgolfier balloon (5) is separated, at least partly at the level of annular edge (10) of said Montgolfier balloon into two strands (16e, 16f) each of which extends over half the perimeter of said annular edge, said strands being linked with one another at their end.

Fig. 1

Fig. 2

Fig.3a

Fig. 3b

Fig. 4b

Fig. 4a

Fig. 5

Fig. 6

EP 0 401 891 B1

Fig. 7

20

Fig. 8

Fig.9a

Fig.9b

Fig.10a

Fig.10b